# EUROPÄISCHE PATENTSCHRIFT

(11) **EP 0 730 516 B1**
(45) Veröffentlichungstag und Bekanntmachung des Hinweises auf die Patenterteilung: **20.08.1997**
(21) Anmeldenummer: 94930930.6
(22) Anmeldetag: 26.10.1994
(51) Int. Cl.: B27B 7/00, B27B 31/06, B23D 57/02, B23D 45/10

(54) **EINRICHTUNG ZUR BEARBEITUNG VON MASSIVHOLZWERKSTÜCKEN IN IHRER LÄNGSRICHTUNG**
DEVICE FOR LONGITUDINALLY WORKING SOLID TIMBER WORKPIECES
DISPOSITIF POUR L'USINAGE DE PIECES DE BOIS MASSIVES DANS LE SENS DE LEUR LONGUEUR

(30) Priorität: 25.11.1993 DE 4340213; 18.03.1994 DE 4409363; 12.07.1994 DE 4424545
(43) Veröffentlichungstag der Anmeldung: 11.09.1996
(73) Patentinhaber: GREIL, Karl, D-94256 Drachselsried (DE)
(72) Erfinder: GREIL, Karl, D-94256 Drachselsried (DE)
(74) Vertreter: KUHNEN, WACKER & PARTNER
(86) Internationale Anmeldenummer: DE9401257
(87) Internationale Veröffentlichungsnummer: WO9514556

(56) Entgegenhaltungen:
- DE-A- 1 954 471
- DE-A- 3 705 833
- DE-A- 3 714 769
- GB-A- 836 621
- US-A- 3 718 063
- US-A- 4 468 992

## Beschreibung

Die Erfindung betrifft eine Einrichtung zur Bearbeitung von Massivholzwerkstücken in ihrer Längsrichtung.

In der vorliegenden Beschreibung und in den Ansprüchen werden unter Massivholzwerkstücken aus gewachsenem Holz bestehende Werkstücke in Gestalt von Stämmen oder Rundholz, vornehmlich aber Dielen, Bretter, Kantholz beliebiger Stärke und solche Werkstücke verstanden, die vor der Bearbeitung mit der hier angegebenen Einrichtung mindestens bereits eine längslaufende Fläche als Bezugsfläche und Angriffsfläche für Haltevorrichtungen aufweisen.

Unter einer Bearbeitung in der Werkstücklängserstreckung ist hier eine solche Bearbeitung zu verstehen, bei der nach dem Bearbeitungsschritt am Werkstück Bearbeitungsflächen oder Trennflächen festzustellen sind, die sich über die längste Abmessung des Werkstücks hin erstrecken und mindestens im wesentlichen parallel zur Werkstücklängsachse verlaufen.

Aus der US-PS 5 109 899 ist es bekannt, mittels einer Halte- und Spannvorrichtung einen das Massivholzwerkstück bildenden Baumstammabschnitt jeweils stirnseitig festzuhalten und abzustützen, wobei die Halte- und Spannvorrichtung an einem Gestell angeordnet ist, welches sowohl eine Verdrehung und Feststellung des Massivholzwerkstückes mit Bezug auf seine Längsachse, als auch eine Einstellung der Orientierung dieser Längsachse ermöglicht. Parallel zur Werkstücklängsachse erstreckt sich eine in ihrer Gesamtheit quer zu dieser Längsachse einstellbar verfahrbare Führungsbahn mit einem in Führungsbahnlängsrichtung bewegbaren Schlitten, der eine Kreissägenanordnung trägt. Diese ist in einem Arbeitshub derart längs der Führungsbahn verschiebbar, daß von einem an der Halte- und Spannvorrichtung eingespannten Baumstammabschnitt Seitenbretter abgetrennt werden können.

Aus der DE-OS 1 954 471 ist es ferner bekannt, in einer Bearbeitungsstation, deren wirksame Bearbeitungsbreite mindestens gleich der Länge eines das Massivholzwerkstück bildenden Baumstammabschnittes ist, eine Bandsäge vorzusehen, welche gegenüber dem Werkstück in ihrer Gesamtheit derart senkrecht zur Werkstücklängsachse bewegbar, beispielsweise absenkbar ist, daß ein geradliniger Sägebandabschnitt, der sich über die gesamte Werkstücklänge erstreckt, im wesentlichen an sämtlichen Längenabschnitten des Werkstücks die Bearbeitung gleichzeitig vornehmen soll. Die Sägezähne der Bandsäge durchschneiden dabei das Holz im wesentlichen in Faserrichtung.

Fällt zur Bearbeitung eine große Anzahl von Massivholzwerkstücken an, bereitet das Vereinzelen zur Weiterverarbeitung und die Zuförderung zu der Bearbeitungsstation oder den Bearbeitungsstationen Schwierigkeiten und führt zu sehr hohen Durchlaufgeschwindigkeiten, was einen beträchtlichen Raumbedarf der gesamten Anlage und hohe Aufwendungen bedingt.

Die vorstehend erwähnten Einrichtungen bekannter Art eignen sich nicht für die rasche Bearbeitung einer großen Anzahl von Massivholzwerkstücken in ihrer Längsrichtung in einem kontinuierlichen oder nahezu kontinuierlichen Betrieb.

Aus der US-PS 4,468,992 ist eine Einrichtung zur Bearbeitung von Massivholzwerkstücken in ihrer Längsrichtung mit den Merkmalen des Oberbegriffs von Patentanspruch 1 oder von Patentanspruch 2 bekannt. Die Bearbeitungstation der bekannten Einrichtung, die eine wirksame Bearbeitungsbreite mindestens gleich der Länge zu bearbeitender Werkstücke hat, wird von einer Anordnung von Kreissägen gebildet, die an einem Wagen montiert sind, der durch Antriebsmittel in Werkstücklängsrichtung über eine Länge verfahrbar ist, die größer als die Länge zu bearbeitender Werkstücke ist.

Durch die Erfindung soll die Aufgabe gelöst werden, eine Einrichtung zum Bearbeiten von Massivholzwerkstücken in ihrer Längsrichtung mit den Merkmalen des Oberbegriffes von Patentanspruch 1 oder von Patentanspruch 2 so auszugestalten, daß eine große Anzahl von Werkstücken rasch bearbeitet werden kann, die Bearbeitungsgeschwindigkeit gegenüber entsprechenden bekannten Einrichtungen also weiter erhöht werden kann.

Diese Aufgabe wird erfindungsgemäß durch die Merkmale von Patentanspruch 1 oder von Patentanspruch 2 gelöst.

Vorteilhafte Ausgestaltungen und Weiterbildungen einer Einrichtung nach Patentanspruch 2 sind in den diesem Anspruch nachgeordneten Ansprüchen gekennzeichnet, auf deren Inhalt hierdurch ausdrücklich hingewiesen wird, ohne an dieser Stelle den Wortlaut dieser Ansprüche zu wiederholen. Es sei jedoch kurz nachfolgend auf einige Merkmale dieser nachgeordneten Ansprüche von besonderer Bedeutung eingegangen.

Bevorzugtes Anwendungsgebiet einer Einrichtung der hier angegebenen Art ist das Besäumen von Brettern oder das Aufteilen von Brettern oder Kantholz in Leisten.

Während bei der Bearbeitung von Massivholzwerkstücken in Gestalt von Stammholz zur Herstellung des sog. Prismas, also zur Herstellung zweier einander gegenüber liegender Bearbeitungsflächen als Bezugsflächen an dem Stammholz, nach dem entsprechenden Bearbeitungsschritt wiederum im wesentlichen ein einziges weiter zu handhabendes Werkstück vorliegt, vervielfacht sich die Zahl zu handhabender Werkstücke beim Aufschneiden von Kantholz in Bretter oder auch bei dem Besäumen der vom Stammholz abgetrennten Seitenbretter. Setzt man also eine bestimmte Abeitsgeschwindigkeit einer Bearbeitungsstation hoher Leistung zur Bearbeitung jeweils eines Baumstammabschnittes voraus, so muß, wenn in der betreffenden Bearbeitungsstation eine Vervielfachung der Werkstückzahl stattfindet, die Arbeitsgeschwindigkeit nachgeschalteter Bearbeitungsstationen entsprechend vervielfacht werden, damit jede Bearbeitungsstation mit der ihr möglichen Arbeitsgeschwindigkeit betrieben werden kann.

Wenn nun eine Einrichtung zur Bearbeitung von Massivholzwerkstücken in ihrer Längsrichtung in der hier angegebenen prinzipiellen Weise ausgebildet wird, und die einzelnen Werkstücke quer zu ihrer Längsrichtung in einem durchgehenden Förderkanal gefördert und auch durch die in diesem Förderkanal befindliche mindestens eine Bearbeitungsstation rasch bearbeitet werden sollen, so müssen die sich in Werkstücklängsrichtung erstreckenden TrennSchnitte oder Bearbeitungsflächen im wesentlichen augenblicklich entstehen, damit eine Querförderung der Werkstücke im Förderkanal in raschem Takt oder nahezu kontinuierlich geschehen kann. Die dabei auftretenden Reaktionskräfte werden gemäß einer bevorzugten Ausführungsform einer hier angegebenen Einrichtung zur Besäumung von Brettern oder zur Aufteilung von Brettern von einer Halte- und Spannvorrichtung aufgenommen, die die Werkstücke im wesentlichen über ihre gesamte Länge hin an einer längslaufenden Werkstückfläche oder an zwei längslaufenden Werkstückflächen, die zur Ebene der herzustellenden Bearbeitungsfläche oder Trennebene im wesentlichen senkrecht ist bzw. sind, punktbereichsweise oder durchgehend einspannt oder hält. Auch dann, wenn die Werkstücke selbst nicht mehr eine ausreichende Steifigkeit oder Formbeständigkeit haben, können so in der mindestens einen Bearbeitungsstation präzise Trennflächen oder Schnitte bei hoher Arbeitstaktgeschwindigkeit hergestellt werden.

Weiter ist festzustellen, daß eine Bearbeitungswerkzeuganordnung für eine Einrichtung der hier angegebenen Art zur im wesentlichen taktweisen Bearbeitung der Werkstücke und zur im wesentlichen gleichzeitigen Bearbeitung an sämtlichen Längenabschnitten der Werkstücke mit hoher Bearbeitungsgeschwindigkeit nur dann betrieben werden kann, wenn die bei einer solchen hohen Arbeitsgeschwindigkeit auftretenden Kräfte nicht zu einer Verformung der Werkzeuganordnung oder zu Verhältnissen bei der Spanbildung führen, die die Funktionsfähigkeit stören oder gänzlich ausschließen. Solche Überlegungen gelten insbesondere beispielsweise bei einer Untersuchung der Funktionsfähigkeit von bekannten Einrichtungen nach der deutschen Offenlegungsschrift 1 954 471.

Eine bevorzugte Lösung der soeben angesprochenen Probleme gemäß einer bevorzugten Ausführungsform von Einrichtungen der hier angegebenen Art sieht vor, daß die Bearbeitungswerkzeuganordnung derart ausgebildet ist, daß bei der auf allen Längenabschnitten des Werkstücks im wesentlichen gleichzeitigen Bearbeitung die Werkzeuge oder Werkzeugelemente in das Werkstück quer zur Werkstücklängsrichtung gleichsam einstechen können, da die Werkzeuge oder Werkzeugelemente von Führungs- oder Haltemitteln aus nur auf eine Strecke abstehen oder ausfahrbar sind, welche der Abmessung des herzustellenden Trennschnittes oder der herzustellenden Bearbeitungsfläche in Richtung senkrecht zur Werkstücklängsrichtung gleich ist. Die Werkzeughaltemittel oder Werkzeugführungsmittel können der gesamten Bearbeitungswerkzeuganordnung über die vergleichsweise große Länge des zu bearbeitenden Werkstückes hin eine beträchtliche Formstabilität verleihen, da sie den Werkzeugen oder Werkzeugelementen nicht durch den herzustellenden Sägespalt oder Trennspalt folgen müssen.

Nachfolgend werden Ausführungsbeispiele anhand der Zeichnungen beschrieben. Es stellen dar:
**Fig. 1** eine schematische, teilweise im Schnitt gezeichnete Ansicht einer Einrichtung der hier angegebenen Art in Blickrichtung parallel zur Längsrichtung zu bearbeitender Bretter als Massivholzwerkstücke,
**Fig. 2** eine Schnittansicht einer Bearbeitungsstation in schematisierter Darstellungsweise und in einer gegenüber dem entsprechenden Teil von Fig. 1 abgewandelten Form,
**Fig. 3** eine schematische, perspektivische Ansicht einer Einrichtung der hier angegebenen Art zur Bearbeitung von hier die Massivholzwerkstücke bildenden Baumstammabschnitten,
**Fig. 4** eine schematische perspektivische Ansicht einer Bearbeitungsstation mit einem axial verlaufenden, eingespannten Sägeblatt nach Art einer Spannsäge,
**Fig. 4a** eine schematische perspektivische Ansicht eines kurzen axial verlaufenden Abschnittes eines Massivholzwerkstückes und einer umlaufenden Bandsäge mit einem geführten Sägeblattabschnitt,
**Fig. 5** eine schematische, perspektivische Ansicht einer Bearbeitungsstation mit einer Reihe nebeneinander angeordneter Kreissägen,
**Fig. 6** eine Seitenansicht einer Bearbeitungsstation mit einer Reihe hintereinander gestaffelt angeordneter Kettensägen,
**Fig. 7** eine perspektivische Ansicht einer Bearbeitungsstation zur Anlegung von Trennschnitten in einer zur Hauptebene des Förderkanals parallelen Ebene
**Fig. 8** eine schematische perspektivische Ansicht einer Einrichtung der hier angegebenen Art mit einem gefalteten Verlauf des Förderkanals und einer besonderen Ausbildung der Kalte- und Spannvorrichtung,
**Figuren 9 und 10** schematische perspektivische Abbildungen von Vorrichtungen zur Werkstückausrichtung während der Förderung und
**Fig. 11** eine schematische perspektivische Ansicht einer Bearbeitungsstation für eine Einrichtung gemäß Fig. 8.

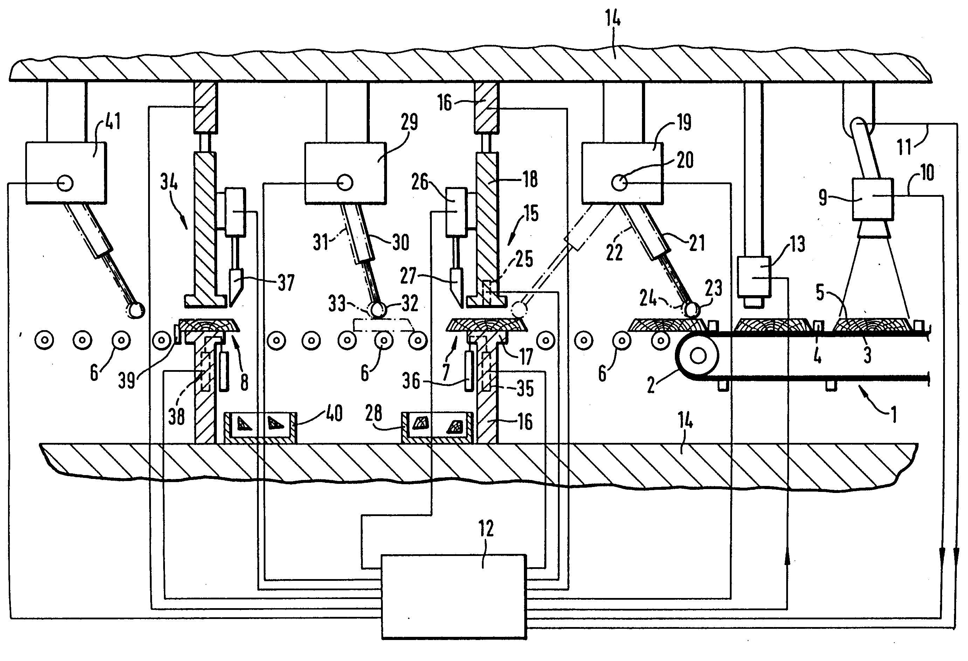

Fig. 1 zeigt eine Zufördereinrichtung 1 mit parallel zueinander über Rollen 2 geführten Förderbändern 3, welche mit in bestimmten Abständen längs der Förderbänder an diesen befestigten Mitnehmerfingern 4 versehen sind, deren gegenseitige Abstände längs der Förderbänder 3 größer als die maximalen Breiten zu bearbeitender brettartiger Werkstücke 5 sind. Die Förderbänder 3 können kontinuierlich oder intermittierend durch geeignete Antriebsmittel in Bewegung gesetzt sein.

Auf die Förderbänder 3 werden quer zu deren Längsrichtung und Förderrichtung aus einem Verband oder Stapel von brettartigen Werkstücken, beispielsweise aus der Menge der ein Sägegatter verlassenden Bretter diese vereinzelt in der aus Fig. 1 erkennbaren Weise aufgelegt und in Richtung auf eine oberseitig mit dem Obertrum der Zufördereinrichtung 1 fluchtende Rollenbahn 6 gefördert, welche in der Reihe mit ihren Achsen parallel liegender Rollen mehrere Unterbrechungen 7, 8 aufweist, auf deren Bedeutung nachfolgend eingegangen wird. Die Rollenbahn 6 bildet zusammen mit über ihr installierten Manipulatorvorrichtungen jeweils längs des oberhalb der Rollenbahn verlaufenden durchgehenden Förderkanals aufgereihte Fördervorrichtungen.

Oberhalb der Zufördereinrichtung 1 befindet sich eine Abtasteinrichtung 9 in Gestalt einer Fernsehkamera, welche die Form der auf die Zufördereinrichtung 1 befindlichen Bretter 5 in deren Aufsicht abtastet und das Abtastergebnis über Signalleitungen 10 und 11 an eine zentrale Steuer- und Recheneinheit 12 liefert.

Außerdem kann sich oberhalb der Zufördereinrichtung 1 eine Markierungsvorrichtung 13 befinden, welche unter Steuerung durch die zentrale Steuer- und Recheneinheit 12 auf den nach oben weisenden Flächen der Bretter 5 Markierungen anbringt, die entweder die Ist-Lage entsprechend dem Abtastergebnis der Abtastvorrichtung 9 anzeigen, oder aus diesem Abtastergebnis durch die Einheit 12 errechneten Soll-Lagen entsprechen. Sowohl die Abtastvorrichtung 9 als auch die Markierungsvorrichtung 13 sind fest mit einem Maschinengestell verbunden, das in Figur 1 symbolisch bei 14 angedeutet ist.

In dem Bereich der Unterbrechung 7 der Rollbahn 6 befindet sich eine erste Bearbeitungsstation 15 mit einem am Gestell 14 befestigten Portalrahmen 16, dessen Aufnahmeweite in Blickrichtung des Betrachters von Figur 1 der maximalen Länge zu bearbeitenden Bretter 5 entspricht. Der untere Holm des Portalrahmens 16 bildet einen Gegenhalter 17, dessen Auflagefläche in der dargestellten Weise mit den oberen Scheiteln der Rollen der Rollenbahn 6 fluchtet. Der obere Holm des Portalrahmens 16 enthält Antriebsmittel, beispielsweise nicht dargestellte Hydraulikantriebe, mittels welchen ein Spannbalken 18 von der Auflagefläche des Gegenhalters 17 abhebbar oder auf diese Auflagefläche hin bewegbar ist, derart, daß ein zwischen die Auflagefläche des Gegenhalters 17 und den Spannbalken 18 eingeschobenes Brett durch Absenken des Spannbalkens 18 zur Bearbeitung einspannbar ist.

Zwischen der Bearbeitungsstation 15 und der Zufördervorrichtung 1 ist an dem Gestell 14 oberhalb der Rollbahn 6 ein Manipulator 19 befestigt, welche zwei mit Bezug auf die Blickrichtung des Betrachters von Figur 1 nebeneinander liegende und um eine Schwenkachse 20 verschwenkbare, längenverstellbare Manipulatorarme 21 und 22 aufweist, deren Arbeitsfinger 23 bzw. 24 dazu dienen, ein die Zufördervorrichtung 1 gerade in Richtung auf die Rollbahn 6 verlassendes Brett 5 zu erfassen, über den zwischen der Zufördervorrichtung 1 und der Bearbeitungsstation 15 gelegenen Abschnitt der Rollblahn 6 hinwegzuführen und in den Spalt zwischen dem angehobenen Spannbalken 18 und der Auflagefläche des Gegenhalters 17 einzuschieben, wozu in dem Spannbalken 18 schlitzartige Ausnehmungen vorgesehen sein können, um für die Arbeitsfinger 23 und 24 in diesem Bereich ausreichenden Bewegungsraum zu schaffen.

Die jeweils unabhängig steuerbare Schwenkung und Längenveränderung der Manipulatorarme 21 und 23 erfolgt nach vorbestimmten Programmen in Abhängigkeit von dem Abtastergebnis der Abtastvorrichtung 9 unter Steuerung der zentralen Steuer- und Recheneinheit 12. Eine korrigierende Steuerung und Betätigung der Manipulatorarme des Manipulators 19 kann von der Einheit 12 auch noch in Abhängigkeit von einem Abtastergebnis eines in einer Ausnehmung des Spannbalkens 18 montierten Markenlesers 25 ausgelöst werden, der die von der Markierungsvorrichtung 13 auf die Brettoberflächen aufgebrachten Marken abtastet, um jedenfalls eine präzise Positionierung eines zu bearbeitenden Brettes 5 in der Bearbeitungsstation 15 zu gewährleisten.

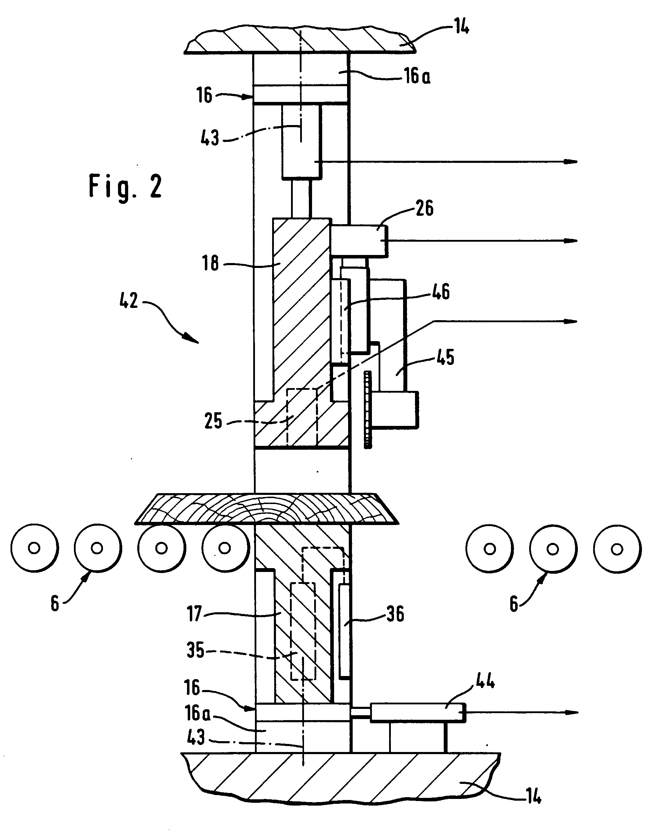

Anstelle der im Zusammenhang mit dem Ausführungsbeispiel nach Figur 1 beschriebenen unabhängigen Steuerung der Schwenkung und Längenveränderung der Manipulatorarme 21 und 23 läßt sich gemäß einer abgewandelten Ausführungsform eine Vereinfachung der Ausrichtung des zu bearbeitenden Werkstückes mit Bezug auf eine bestimmte Winkellage seiner Längsachse dadurch erreichen, daß die gesamte Manipulatorvorrichtung 19 und gegebenenfalls auch die Manipulatorvorrichtungen 29 und 41 jeweils um vertikale Achsen einstellbar verdrehbar an dem Gestell 14 montiert sind, so daß die jeweilige Winkelstellung der Manipulatorvorrichtungen mittels eines von der Einheit 12 gesteuerten Stelltriebs veränderbar ist und sich damit auch die Orientierung der Verbindungslinie zwischen den Arbeitsfingern 23 und 24 bzw. 32 und 33 relativ zur Längsrichtung der Bearbeitungsstationen ändern läßt, worauf im Zusammenhang mit Figur 2 näher eingegangen wird.

Eine andere Abwandlung der Ausführungsform nach Figur 1 sieht vor, anstelle der einzelnen Manipulatorarme der Manipulatorvorrichtungen jeweils Paare von im Gegentakt arbeitenden Manipulatorarmen vorzusehen, derart, daß eine Manipulatorvorrichtung beispielsweise insgesamt vier Manipulatorarme aufweist, von denen im Betrieb jeweils zwei Manipulatorarme mit dem Einschieben eines Werkstückes in die zugehörige Bearbeitungsstation beschäftigt sind, während die anderen beiden Arme unter Anhebung ihrer Arbeitsfinger über die Roll- oder Gleitbahn und über darauf noch befindliche Werkstücke hinweg bereits das nächste zu fördernde und dann zu bearbeitende Werkstück erfassen. Die Arbeitsgeschwindigkeit läßt sich hierdurch beträchtlich erhöhen.

Auf der von der Zufördervorrichtung 1 abliegenden Seite des Spannbalkens 18 ist an diesem mittels Antrieben 26 anhebbar und absenkbar eine Messerleiste 27 montiert, deren Länge in Blickrichtung des Betrachters von Figur 1 der Maximallänge zu bearbeitender Bretter mindestens entspricht. Geeignete Führungen für die Messerleiste 27 sind zur Vereinfachung der Darstellung in Figur 1 weggelassen, jedoch selbstverständlich bei einer praktischen Ausführungsform vorgesehen.

Ist ein in der Bearbeitungsstation 15 auf einer Seite zu besäumendes Brett 5 auf der Auflagefläche des Gegenhalters 17 mittels des Manipulators 19 positioniert und durch entsprechende Steuerung der Manipulatorarme 21 und 22 auf dieser Auflagefläche in eine Richtung gebracht, die der Lage und Richtung des anzubringenden Längsschnittes entspricht, so wird der Spannbalken 18 unter Steuerung durch die Einheit 12 abgesenkt und dann die Messerleiste 27 durch Steuerung der Antriebe 26 vermittels der Einheit 12 abwärts bewegt, so daß die Messerschneide gegen die hintere Kante der Auflagefläche des Gegenhalters 17 in einem einzigen Arbeitstakt einen Besäumungsschnitt an dem Brett 5 ausführt, wobei der Spreißel in einen Auffangbehälter 28 unterhalb eines Spaltes zwischen der Bearbeitungsstation 15 und dem nachfolgenden Abschnitt der Rollbahn 6 fällt.

Danach wird der Spannbalken 18 der Bearbeitungsstation 15 in ausreichendem Maße angehoben, um es einem der Bearbeitungsstation 15 nachgeschalteten, ebenfalls an dem Gestell 14 befestigten weiteren Manipulator 29, gegebenenfalls unter Zusammenwirkung mit dem Manipulator 19, zu ermöglichen, mit seinen Manipulatorarmen 30 und 31 und seinen Arbeitsfingern 32 und 33 das nunmehr einseitig bearbeitete Brett 5 zu erfassen, unter dem Spannbalken 18 heraus und auf denjenigen Abschnitt der Rollbahn 6 zu schieben, der sich zwischen der Bearbeitungsstation 15 und einer weiteren, nachgeschalteten Bearbeitungsstation 34 befindet. Sollte es wegen zu geringer Breite des einseitig bearbeiteten Brettes 5 Schwierigkeiten bereiten, den Spalt zwischen der Bearbeitungsstation 15 und dem zwischen den Bearbeitungsstationen 15 und 34 gelegenen Abschnitt der Rollbahn 6 zu überwinden, so kann für den soeben kurz beschriebenen Übergabevorgang mittels eines Antriebs 35 eine an dem Auflager 17 schwenkbar gelagerte Klappe 36 zur kurzzeitigen Abdeckung des genannten Spaltes hochgeklappt werden. Ganz Entsprechendes gilt übrigens für eine kurzzeitige Abdeckung des Spaltes zwischen der Bearbeitungsstation 34 und dem Rollbahnabschnitt zwischen den Bearbeitungsstationen 34 und 15. Eine Abdeckung des Spaltes zwischen den Bearbeitungsstationen und den jeweiligen Abschnitten der Rollbahn 6 ist nicht erforderlich, wenn die Arbeitsfinger der Manipulatorarme mit Saugnäpfen oder Greifern oder zum Anspießen der Holzwerkstücke ausgestattet bzw. ausgebildet sind, derart, daß mittels der Manipulatorvorrichtungen die Holzwerkstücke über größere Unterbrechungen der Unterstützungsflächen oder der Rollen der Rollbahn hinweggehoben werden können.

Während die Bearbeitungsstation 34 bezüglich ihres Portalrahmens, der darin befindlichen Antriebe zum Absenken ihres Spannbalkens und bezüglich des Auflagers und weiter bezüglich ihrer mittels Antrieben anhebbarer und absenkbarer Messerleiste 37 ganz entsprechenden Aufbau wie die Bearbeitungsstation 15 hat, ist aber im Unterschied zur Bearbeitungsstation 15 für die Bearbeitungsstation 34 festzustellen, daß sich hier die Messerleiste 37 auf der der Querfördervorrichtung 1 zugewandten Seite der Bearbeitungsstation befindet und daß ferner auf der von der Querfördervorrichtung 1 abgewandten Seite der Bearbeitungsstation 34 mittels eines Antriebs 38 über das Niveau der Auflagefläche des Gegenhalters der Bearbeitungsstation anhebbare und absenkbare Anschlagmittel 39 vorgesehen sind. Gegen diese Anschlagmittel läuft die bearbeitete Kante des einseitig bearbeitenden Brettes beim Einfördern zwischen den Spannbalken und den Gegenhalter mittels des Manipulators 29 an.

Die Anschlagmittel 39 sind mittels des Antriebs 38 aber nicht nur über das Niveau der Auflagefläche des Gegenhalters der Bearbeitungsstation 34 anhebbar und wieder absenkbar, sondern zusätzlich durch entsprechende Steuerung des Antriebs 38 vermittels der zentralen Steuer- und Recheneinheit 12 wahlweise auf bestimmte Position in größerem oder kleinerem Abstand von der Schneide der Messerleiste 37 einstellbar, wodurch aufgrund des Abtastergebnisses der Abtastvorrichtung 9 nach entsprechenden Berechnungen in der Einheit 12 die Breite eines beidseitig bearbeiteten Brettes bestimmt werden kann. Durch unterschiedliches Ansteuern der Anschlagmittel 39 oder, falls die Position für den zweiten Bearbeitungsschritt allein durch einen Manipulator bestimmt wird, durch dessen entsprechende Steuerung, kann ein konisches Besäumen oder Bearbeiten erreicht werden.

Ist der von der Bearbeitungsstation 34 auszuführende Längsschnitt an dem Brett 5 durchgeführt und der Spreißel in einen Auffangbehälter 40 abgeworfen, so wird der Anschlag 39 abgesenkt, der Spannbalken der Bearbeitungsstation 34 in ausreichendem Maße angehoben und das fertig bearbeitete Brett wird mittels des der Bearbeitungsstation 34 nachgeschalteten Manipulators 41 auf dem der Bearbeitungsstation 34 nachgeschalteten Abschnitt der Rollbahn 6 weitergeführt.

Figur 2 zeigt eine Abwandlung der Bearbeitungsstation in einer Einrichtung der hier angegebenen Art. Hier ist die Bearbeitungsstation, welche in Figur 2 allgemein mit 42 bezeichnet ist, mit ihrem Portalrahmen 16 nicht fest mit dem Gestell 14 verbunden, sondern über Drehlager 16a um eine Vertikalachse 43 vermittels eines an dem Portalrahmen 16 angreifenden, sich gegen das Gestell 14 abstützenden Antriebs 44 in einem kleinen Winkelbereich verschwenkbar. Die Vertikalachse 43 kann beispielsweise im Bereich der Mitte des Portalrahmens 16 mit Bezug auf dessen Abmessung in Richtung der Länge zu bearbeitender Bretter gelegen sein. Während bei der Ausführungsform nach Figur 1 die Lage des Schnittes und seine Richtung an dem zu bearbeitenden Brett ausschließlich durch entsprechende Steuerung der Bewegung der Manipulatorarme des Manipulators 19 und, falls man auf die Anordnung der Anschlagmittel 39 bei der Ausführungsform nach Figur 1 verzichten sollte, auch durch Steuerung der Manipulatorarme des Manipulators 29, bestimmt wird, wird bei einer Einrichtung der hier angegebenen Art mit einer Bearbeitungsstation nach Figur 2 die Schnittrichtung durch entsprechende Verschwenkung der gesamten Bearbeitungsstation vermittels des Antriebs 44 unter Steuerung durch Einheit 12 bestimmt. Die jeweilige Lage des Schnittes mit Bezug auf die Förderrichtung der Bretter durch die Einrichtung kann wieder durch entsprechende Steuerung der Manipulatoren eingestellt werden, die jedoch in diesem Falle vereinfacht ausgebildet sein können, da ihre Manipulatorarme nicht unabhängig voneinander verschwenkbar ausgebildet sein müssen.

Die Einheit 12 kann bei der Ausführungsform der Bearbeitungsstation nach Figur 2 die Schwenkstellung des Portalrahmens 16 mittels des Antriebs 44 wiederum aufgrund des Abtastergebnisses der über der Querfördervorrichtung 1 befindlichen Abtastvorrichtung 9 und/oder aufgrund des Abtastergebnisses eines in dem Spannbalken 18 untergebrachten Markenlesers 25 bestimmen.

An dem Spannbalken 18 der Bearbeitungsstation 42 ist eine Kettensäge 45 montiert, die gegenüber dem Spannbalken mittels des Antriebs 26 an einer Schlittenführung 46 unter das Niveau der Spannfläche des Spannbalkens absenkbar und wieder anhebbar ist. In Figur 2 ist das Schwert der Kettensäge 45 in Schwertlängsrichtung gesehen dargestellt. Die Länge des Kettenschwertes ist größer als die Maximallänge zu bearbeitender Bretter. Die Zahnhöhe der Sägekettenglieder ist vorzugsweise etwas größer als die maximale Dicke zu bearbeitender Bretter, derart, daß bei dem Trennschnitt durch die Brettdicke hindurch das Kettenschwert nicht in den Sägespalt einzudringen braucht und daher so breit ausgeführt werden kann, daß es eine stabile Führung für sämtliche Sägekettenglieder auf der gesamten Länge des Sägeschwertes bietet.

Auch hin- und herbewegte Sägeblätter in geeigneten balkenartigen Führungen nach Art eines Fuchsschwanzes, einer langgestreckten im vorstehenden Sinne seitlich geführten Bandsäge oder Spannsäge in einer Länge mindestens gleich der Länge der Werkstücke erfüllen den hier angestrebten Zweck.

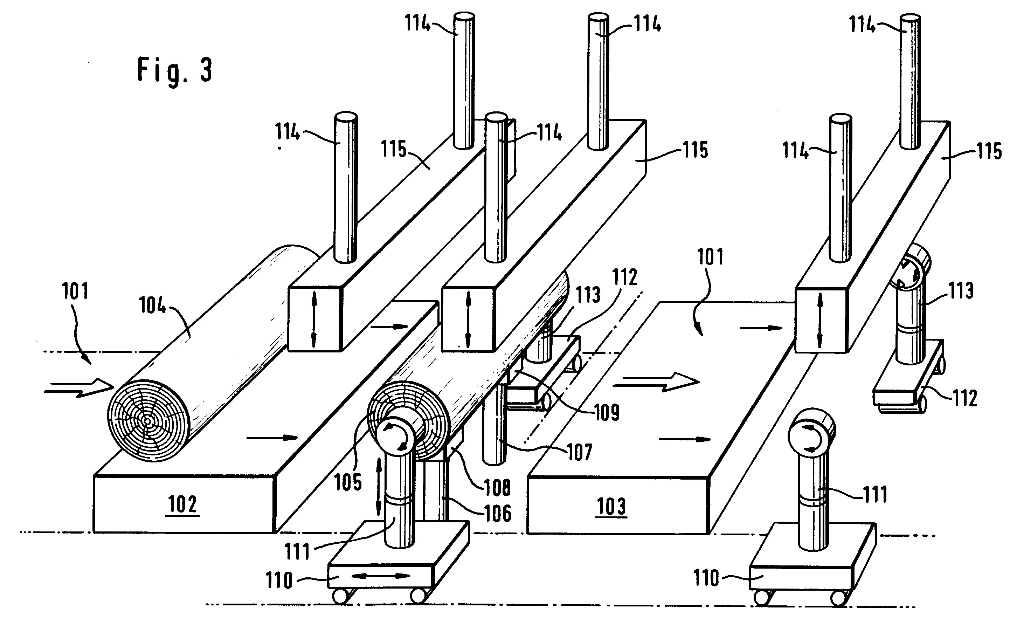

Bezugnehmend nunmehr auf Fig. 3 sei angemerkt, daß hier als zu bearbeitende Massivholzwerkstücke Baumstammabschnitte gezeigt sind, deren Bearbeitung in Einrichtungen mit den prinzipiellen Merkmalen der hier vorgeschlagenen Konstruktion deren Vorteile nicht so deutlich werden läßt, wie die Bearbeitung etwa von Brettern. Den Ausführungsformen nach den Figuren 1 und 3 ist jedoch der durchgehende Werkstückförderkanal gemeinsam, dessen Querschnitt durchgehend mindestens eine Breite gleich der Länge zu bearbeitender Werkstücke und eine Höhe mindestens gleich der Höhe dieser Werkstücke hat.

Die Einrichtung nach Fig. 3 enthält längs des hier mit 101 bezeichneten Förderkanals eine Reihe von in Förderrichtung hintereinander angeordneten, in Fig. 1 nur als quaderförmige Blocksymbole angegebenen Fördervorrichtungen 102, 103 usw. Gemäß einer in der Zeichnung nicht gezeigten Abwandlung kann auch eine sich längs des Förderkanals 101 erstreckende durchgehende Fördervorrichtung anstelle getrennter Fördervorrichtungen vorgesehen sein. Die Fördervorrichtungen 102, 103 usw. dienen zur Förderung von Massivholz-Werkstücken, beispielsweise. von in Fig. 3 angedeuteten Baumstammabschnitten 104, 105 in einer Richtung quer zur Werkstücklängsachse.

Die Fördervorrichtungen können umlaufende Bänder oder Ketten enthalten, die mit Mitnehmern bestückt sein können. Eine andere Möglichkeit der Ausbildung der Fördervorrichtungen besteht in der Anbringung von Schiebegestängen oder Manipulatoren, welche mit Greifern, Zangen, Klauen, Saugnäpfen und dergleichen an den Werkstücken angreifen. Durch jeweils unterschiedlich steuerbare Wege der an den Werkstücken angreifenden Teile der Fördervorrichtungen kann das Werkstück mit seiner Längsachse auf einen bestimmten Winkel relativ zu der Förderrichtung des Förderkanals 101 ausgerichtet werden.

Auch können beidseits des Förderkanals installierte umlaufende Förderketten mit Verankerungsblöcken bestückt sein, die in die Endflächen beispielsweise von Stammabschnitten gleicher Länge eingeschlagen werden, oder jedenfalls dort so verankert werden, daß die Stammabschnitte, den Förderketten folgend, längs des Förderkanals transportiert werden.

Während bei der Ausführungsform nach Fig. 3 die Fördervorrichtungen 102 und 103 unterhalb der Werkstücke 104, 105 usw. gelegen gezeichnet sind, können in Abwandlung hiervon auch Förderrichtungen oberhalb des Niveaus vorgesehen sein, auf dem sich die Werkstücke befinden oder bewegen, derart, daß die Werkstücke hängend an den Fördervorrichtungen transportiert werden.

In einem Bereich zwischen den Fördervorrichtungen 102 und 103 befinden sich Stützsäulen 106 und 107 mit Auflagerblöcken, auf welche die Werkstücke, beispielsweise die Baumstammabschnitte durch entsprechenden Betrieb der Fördervorrichtungen nacheinander aufgelegt werden.

In Bereichen außerhalb des Arbeitsbereichs der Fördervorrichtungen befinden sich auf einem parallel zum Förderkanal 101 verfahrbaren Wagen oder Schlitten 110 eine Halte- und Spanneinheit 111 und auf einem quer zum Förderkanal verfahrbaren oder verschiebbaren Wagen oder Schlitten 112 eine weitere Halte- und Spanneinheit 113. Die Halte- und Spanneinheiten sind mit dreheinstellbaren Aufnahmeköpfen versehen, die auf den einander zugekehrten Seiten Zahnungen tragen, zwischen denen Werkstücke bzw. Stammabschnitte unterschiedlicher Länge unter Verschieben und Feststellen des Wagens oder Schlittens 112 eingespannt werden können.

Der verfahrbare und feststellbare Wagen oder Schlitten 112 dient also zum Halten und Einspannen eines Stammabschnittes in die die Halte- und Spanneinheiten 111 und 113 enthaltende Halte- und Spannvorrichtung. Der verfahrbare und feststellbare Wagen oder Schlitten 110 dient zur Ausrichtung der Längsachse des eingespannten Stammabschnittes auf eine bestimmte Winkelstellung gegenüber der Förderrichtung des Förderkanals in einer Horizontalebene und die höhenverstellbaren Stützen der Aufnahmeköpfe dienen zur Ausrichtung der Werkstücklängsachse in einer Vertikalebene auf einen bestimmten Winkel relativ zu einer Horizontalebene. Schließlich dienen die verdrehbaren Aufnahmeköpfe zum Einstellen des Werkstücks bzw. Stammabschnitts auf eine bestimmte Winkelstellung mit Bezug auf eine Drehung um die Werkstücklängsachse. Auch die Aufnahmeköpfe sind in bestimmten Drehstellungen fixierbar. Die Antriebe für die Verschiebung der Wagen oder Schlitten, für die Höhenverstellung und für die Verdrehung der Aufnahmeköpfe sowie die zugehörigen Feststell- und Steuermittel sind in der Zeichnung zur Vereinfachung der Darstellung weggelassen.

Ist die Verschiebeführung für den Wagen oder Schlitten 110 parallel zum Förderkanal 101 ausreichend lang und ist ferner in Weiterbildung der Ausbildungsform nach Fig. 3 der Wagen oder Schlitten 112 zusammen mit seiner Verschiebeführung wiederum auf einem Wagen montiert, der dem Wagen oder Schlitten 110 entspricht und sich auf der gegenüberliegenden Seite des Führungskanals befindet, so kann die gesamte Halte- und Spannvorrichtung zwischen den Fördervorrichtungen 102 und 103 zusätzlich zur Aufgabe des Einspannens und Ausrichtens des Werkstücks auch noch die Aufgabe erfüllen, unter Verfahren des Wagens oder Schlittens 110 und des den Wagen oder Schlitten 112 tragenden weiteren, in Fig. 3 nicht dargestellten Wagens über weitere Strecken Werkstücke von der Fördervorrichtung 102 aufzunehmen, auf die Stützsäulen ausgerichtet aufzusetzen und dann von dort nach Bearbeitung an die Fördervorrichtung 103 weiterzugeben.

Fig. 3 zeigt, daß der Fördervorrichtung 103 in Förderrichtung nachgeschaltet eine weitere Halte- und Spannvorrichtung vorgesehen ist, die der zuvor beschriebenen Halte- und Spannvorrichtung entspricht, wobei jeweils gleiche Teile auch mit gleichen Bezugszahlen gekennzeichnet sind.

Oberhalb des Förderkanals 101 befinden sich beispielsweise an in Fig. 3 nicht gezeigten Gestellportalen montiert, Führungsschienen oder Führungsstäbe 114, an welchen Bearbeitungseinheiten 115 in Vertikalrichtung von einer Ruhestellung in eine Arbeitsstellung absenkbar und nach Durchführung einer Bearbeitung wieder in die Ruhestellung anhebbar sind. Das in dem Bereich des Zwischenraums zwischen den Fördervorrichtungen 102 und 103 gelegene Paar von Bearbeitungseinheiten 115 bildet eine Bearbeitungsstation und die in Förderrichtung stromabwärts von der Fördervorrichtung 103 gelegene Bearbeitungseinheit 115 ist Teil einer weiteren Bearbeitungsstation oder bildet allein diese Bearbeitungsstation.

Sämtliche Bearbeitungseinheiten 115 haben eine wirksame Arbeitsbreite entsprechend der maximalen Länge zu bearbeitender Werkstücke oder Stammabschnitte und überspannen den Förderkanal 101 in Querrichtung.

Abweichend von der in Fig. 3 gezeigten Anordnung können die Bearbeitungseinheiten 115 auch an Vertikalführungen verschiebbar sein, die es gestatten, die Bearbeitungseinheiten von einem Niveau unterhalb des Förderkanals 101 aus einer Ruhestellung über die Zwischenräume zwischen den Fördervorrichtungen und einem darin eingespannten Werkstück nach aufwärts in eine Arbeitsstellung anzuheben und von dort wieder in die Ruhestellung abzusenken. Eine wiederum andere Variante sieht vor, die Werkstücke vom Niveau des Förderkanals aus in einen Bearbeitungsbereich einer Bearbeitungsstation mittels einer Hubvorrichtung anzuheben oder mittels einer Absenkvorrichtung abzusenken.

Die Bearbeitungseinheiten, welche in Fig. 3 nur vereinfacht als quaderförmige, langgestreckte Blocksymbole angedeutet sind, können entsprechend den hier vorgetragenen Gedanken in vielerlei Art und Weise ausgebildet sein.

Wesentlich ist bei den Ausführungsformen der hier angegebenen Einrichtung, daß die Bearbeitungseinheiten 115 auf ihrem Vorschubweg bzw. ihrem relativen Vorschubweg, im wesentlichen gleichzeitig an allen Längenabschnitten des zu bearbeitenden Werkstücks die Bearbeitung in der Werkstücklängserstreckung durchführen, derart, daß für einen Bearbeitungsschritt nicht diejenige Zeit abgewartet werden muß, die ein schnellaufendes, vorgeschobenes Werkzeug dazu benötigt, den Vorschubweg quer über den gesamten Förderkanal hin zu durchlaufen.

In all denjenigen Fällen, in denen die Bearbeitungsstationen Paare einander gegenüberstehender Bearbeitungseinheiten enthalten, wie dies etwa in den Figuren. 1 und 3 gezeigt ist, ist der gegenseitige Abstand dieser Bearbeitungseinheiten einstellbar veränderlich ausgebildet, damit bei gleichzeitiger Bearbeitung beider Seiten eines Massivholzwerkstückes oder bei gleichzeitiger Herstellung zweier Trennschnitte der gegenseitige Abstand der Bearbeitungsflächen bzw. der gegenseitige Abstand der Trennschnitte in der gewünschten Weise eingestellt werden kann. Diesbezügliche Einzelheiten, die zugehörigen Schiebeführungen und Feststellmittel und gegebenenfalls vorgesehene automatische Einstellvorrichtungen sind in den Zeichnungen zur Vereinfachung der Darstellung weggelassen.

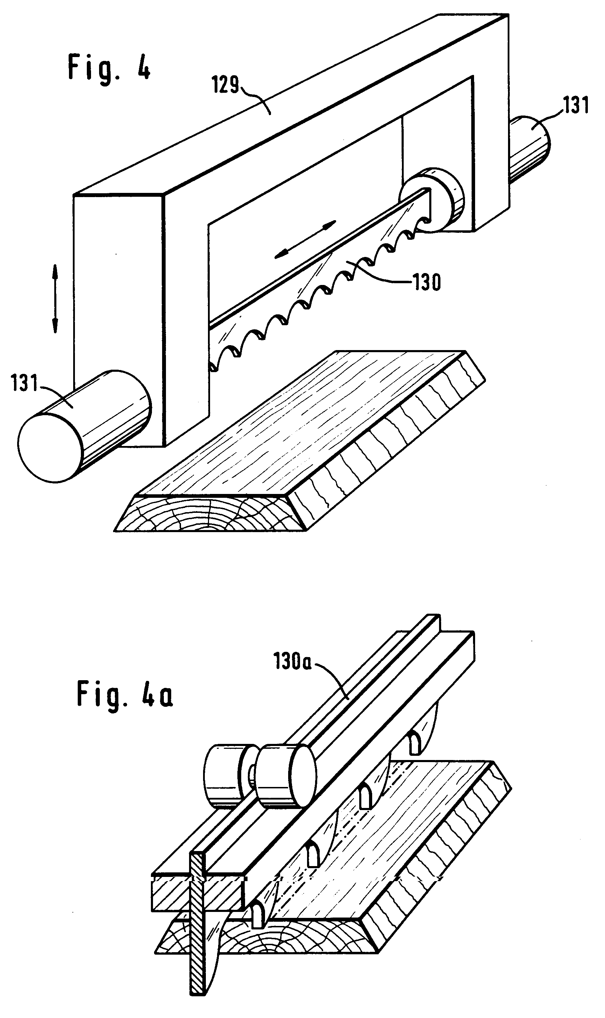

Fig. 4 zeigt schematisch eine Bearbeitungseinheit mit einem auf einen Brettabschnitt in eine Arbeitsstellung absenkbaren und in eine Ruhestellung wieder anhebbaren, die gesamte Länge des Brettabschnittes überspannenden, bogenförmigen Träger 129 und einem zwischen den Bogenschenkeln gespannten, hin- und herbewegbaren Sägeblatt 130, das mittels geeigneter Antriebe 131 betätigt wird. Anstelle eines einzelnen Sägeblattes 130 kann auch ein Paar im Gegentakt gegenläufig bewegter, aneinander anliegender Sägeblätter vorgesehen sein, was in bestimmten Fällen die Schnittleistung verbessert und den Abtransport der Sägespäne erleichtert.

Sehr lange, etwa in Faserrichtung von Massivholz-Werkstücken verlaufende Trennschnitte verursachen mitunter bei entsprechend langem Weg des Sägeblattes durch den Trennschnitt Schwierigkeiten bezüglich des Spanabtransportes. Aus diesem Grunde werden bei Einrichtungen der hier angegebenen Art in Bandsägen und in Sägeeinrichtungen etwa nach Fig. 4 zweckmäßig sehr hohe Sägezähne und große Zahnabstände gewählt, um ausreichend Platz für den Sägespan zu schaffen. Bei der zerspanenden Bearbeitung außerhalb eines Trennschnittes treten derartige Schwierigkeiten nicht auf.

Eine schematische Abbildung einer Ausführungsform einer Bearbeitungseinheit, die eine Bandsäge mit hohen Sägezähnen und großen Zahnabständen aufweist, ist in Fig. 4a gezeigt. Der gezeigte, parallel zur Werkstücklängsrichtung verlaufende Sägebandabschnitt 130a ist Teil eines umlaufenden Bandsägeblattes, das auf mindestens einem geradlinig axial zum Werkstück verlaufenden Abschnitt durch balkenartige Führungselemente seitlich abgestützt ist und auch, etwa durch in Fig. 4a nur schematisch angegebene Rollen, von rückwärts eine solche Abstützung erfährt, daß das Bandsägeblatt auch unter sehr hohen Schnittkräften bei im wesentlichen augenblicklicher Durchtrennung eines Werkstücks in dessen Längsrichtung nicht ausweicht und ein präziser Trennschnitt angelegt werden kann. Die Zahnzwischenräume sind so groß, daß einer von einem Sägezahn über die gesamte Werkstücklänge hin genommener Sägespan in dem Zahnzwischenraum Aufnahme findet, oder die Anordnung ist so getroffen, daß die Zahnzwischenräume solche Höhe bzw. Tiefe besitzen, daß sie stets während des Weges des Sägeblattes durch das Werkstück zugänglich bleiben und gegebenenfalls mittels Preßluft entleert werden können, um den Spanabtransport sicherzustellen.

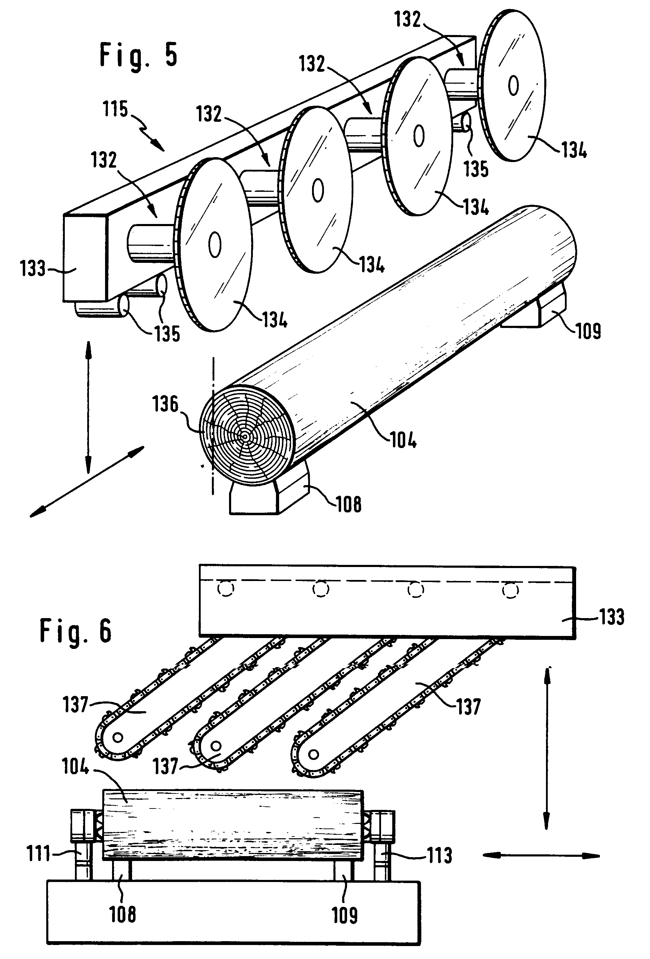

Fig. 5 zeigt eine Form einer Bearbeitungseinheit für eine Einrichtung der hier angegebenen Art, bei der diese Einheit mit einer Mehrzahl von Kreissägen 132 ausgerüstet ist, die an einem gemeinsamen Maschinengehäuse 133 gelagert und von dort aus angetrieben sind und deren Sägeblätter 134 in einer gemeinsamen Vertikalebene liegen. Durch unterhalb des Maschinengehäuses 133 in Fig. 5 eingezeichnete Rollen 135 ist angedeutet, daß das Maschinengehäuse 133 zusammen mit den Kreissägen innerhalb der Bearbeitungseinheit 115 in einer Richtung parallel zur gemeinsamen Ebene der Sägeblätter 134 horizontal verschiebbar ist. Wird die Bearbeitungseinheit 115 an den Führungsstäben 114 von der Ruhestellung aus abgesenkt, so schneiden die Sägeblätter 134 der Kreissägen 132 zur Herstellung eines vertikalen Trennschnittes sämtlich gleichzeitig in den eingespannten und ausgerichteten Stammabschnitt 104 ein. Hat dann die Bearbeitungseinheit 115 ihre untere Grenzstellung erreicht, so wird mittels eines geeigneten Antriebes das Maschinengehäuse zusammen mit den Kreissägen um ein vergleichsweise kurzes Stück in Querrichtung verfahren, so daß der Trennschnitt vervollständigt wird und ein Schwartlingsbrett 136 auf einer Seite des Stammabschnittes von diesem abgetrennt wird. Es ist also bei dieser Ausführungsform nicht notwendig, zur Vervollständigung des Trennschnittes das Bearbeitungswerkzeug in Gestalt einer Kreissäge über die volle Länge des Massivholz-Werkstückes zu verfahren.

Fig. 6 zeigt eine gegenüber Fig. 5 abgewandelte Form einer Bearbeitungseinheit mit an einem gemeinsamen Maschinengehäuse 133 gestaffelt angeordneten Kettensägen 137, deren Schwerter in einer gemeinsamen Vertikalebene gelegen sind. Ähnlich wie bei der Ausführungsform nach Fig. 5 ist das Maschinengehäuse 133 durch eine Rollführung (in Fig. 6 durch unterbrochene Linien angedeutet) mittels eines Antriebs in der Bearbeitungseinheit 115 horizontal verschieblich ausgebildet. Auf diese Horizontalverschieblichkeit kann aber bei der Ausführungsform nach Fig. 6 verzichtet werden, wenn sich die Sägeschnitte der einzelnen Schwerter der Kettensägen 137 in ausreichendem Maße überlappen, wenn die Bearbeitungseinheit ihre untere Grenzstellung erreicht hat, derart, daß der im Werkstück anzubringende Trennschnitt vervollständigt ist, ohne das eine Horizontalverschiebung des Maschinengehäuses durchgeführt werden muß.

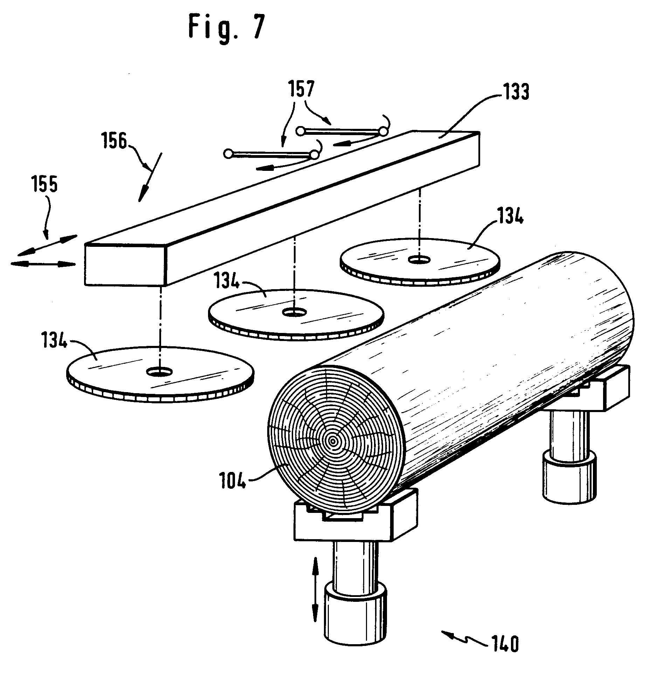

Bezüglich der Ausführungsformen nach den Figuren 5 und 6 ist festzustellen, daß sich die dort gezeigten Bearbeitungseinheiten auch für eine Weiterbildung eignen, die es gestattet, gleichzeitig mehrere parallel liegende Trennschnitte in dem Massivholz-Werkstück vorzunehmen, ohne daß ein einzelnes Bearbeitungswerkzeug über die gesamte Längserstreckung des Werkstückes vorgeschoben werden muß. Ist dafür Sorge getragen, daß die Halte- und Spannvorrichtung und auch die Stützblöcke, etwa aufgrund einer kammartigen Ausgestaltung, mit allen ihren Teilen außerhalb des Bearbeitungsbereiches gelegen sind, so gestatten jeweils Sätze koaxialer Sägeblätter 134 in geeignetem gegenseitigem Abstand bzw. Sätze von Sägeschwertern der Kettensägen 137 die Aufteilung eines langgestreckten Massivholz-Werkstückes in Bretter oder Dielen oder Kantholz unter Vorschub einer Bearbeitungseinheit 115 oder mehrerer Bearbeitungseinheiten dieser Art auf einem vergleichsweise kurzen Arbeitshub in Vertikalrichtung und gegebenenfalls kurzem abschließendem Arbeitshub in horizontaler Richtung zur Vervollständigung sämtlicher Trennschnitte. Abwandlungen dieser Konstruktion und ihrer Betriebsweise werden anhand von Fig. 7 erläutert.

Wie im Zusammenhang mit Fig. 1 ausgeführt, können in den Bearbeitungsstationen auch sich über die gesamte Werkstücklänge erstreckende Messerleisten installiert sein, welche über die gesamte Werkstücklänge hin Randbereiche des Werkstückes abschneiden oder abspalten. Solche, sich über die gesamte Werkstücklänge erstreckenden Stanzmesser, lassen sich auch in Bearbeitungsstationen der zuvor beschriebenen Ausführungsform einer Einrichtung der hier angegebenen Art einsetzen.

Fig. 7 zeigt schematisch und in perspektivischer Darstellung eine Gruppe von Kreissägen mit in einer Horizontalebene gelegenen Kreissägeblättern 134, wobei die Kreissägen an dem gemeinsamen Maschinengehäuse 133 gelagert und von dort aus angetrieben sind. Ähnlich wie bei der Ausführungsform nach Fig. 5 erreicht man einander überlappende Sägeschnitte der Kreissägeblätter durch relativen Vorschub des Maschinengehäuses 133 in Richtung auf das Werkstück 104 und anschließenden Vorschub des Maschinengehäuses 133 in seiner Längsrichtung zur Vervollständigung des Trennschnittes. Diese Betriebsweise ist durch die Pfeilgruppe 45 versinnbildlicht. Sie erfordert zwei getrennte Schiebeführungen.

Bei ausreichendem Durchmesser der Kreissägeblätter 134 können einander überlappende Sägeschnitte im Werkstück auch durch eine einzige Diagonalführung entsprechend dem Pfeil 156 erreicht werden. Die Schrägführung oder Diagonalführung 156, welche horizontal verläuft, entspricht bezüglich der Relativbewegung zwischen den Kreissägeblättern und dem Werkstück einer einfachen Geradführung des Maschinengehäuses 133 in dessen Längsrichtung, wenn die Bewegung des Werkstückes hier auf die Bearbeitungseinheit hin während der Bearbeitung durch die Fördervorrichtung 140 vorgenommen wird. Die aus der Vorschubbewegung, herbeigeführt durch die Fördervorrichtung 140, und aus der Seitwärtsbewegung, herbeigeführt durch die Längsverschiebung des Maschinengehäuses 133, resultierende Bewegung der Kreissägeblätter 134 relativ zu dem Werkstück erfolgt schräg in dieses hinein.

Soll auf Schiebeführungen für das Maschinengehäuse 133 und die daran installierten Werkzeuge verzichtet werden, so kann das Maschinengehäuse an zwei zueinander parallelen, in einer Horizontalebene verschwenkbaren Lenkern, geführt werden. Das Maschinengehäuse 133 und die daran gelagerten Kreissägen schwingen dann unter Bewegung der Kreissägeblätter 134 in einer gemeinsamen Horizontalebene in das Werkstück hinein und aus diesem wieder heraus. Dies ist durch die Pfeile bei 157 verdeutlicht.

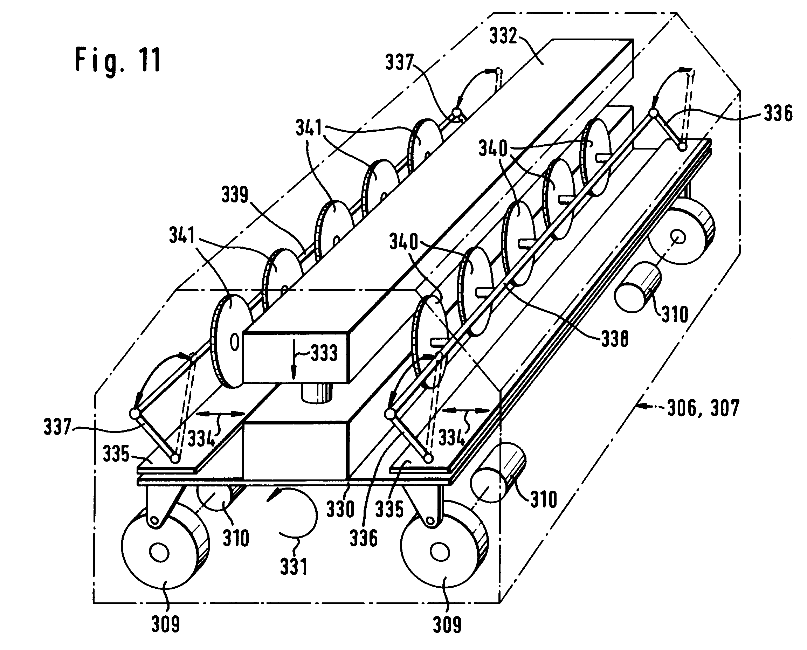

Man erkennt ohne weiteres, daß eine solche Führung des Maschinengehäuses 133 an Lenkern auch bei der Ausführungsform nach Fig. 5 verwirklicht werden kann. Hierauf wird unten im Zusammenhang mit Fig. 11 näher eingegangen.

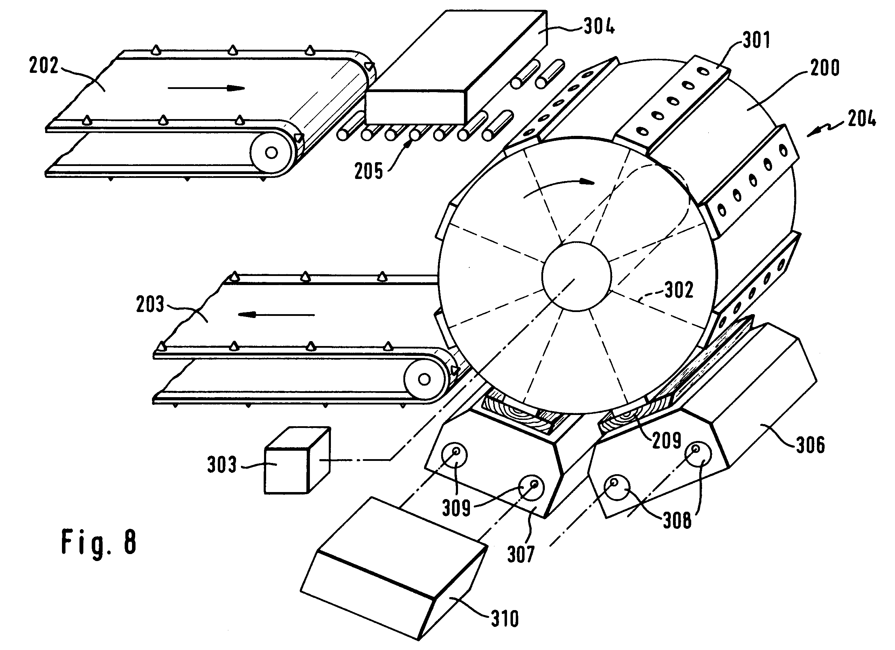

Der durchgehende Förderkanal braucht nicht notwendigerweise horizontal zu verlaufen, sondern kann auch mindestens abschnittsweise vertikal verlaufen oder schachtartig ausgebildet sein, oder, wie in Fig. 8 gezeigt, gefaltet sein, wobei die Halte- und Spannvorrichtung bei dieser Ausführungsform die Gestalt eines Karussells hat und den Weg des Förderkanales umlenkt. Im einzelnen enthält hier die Halte- und Spannvorrichtung 204 einen Trägerzylinder 200, welcher mittels eines in Fig. 8 nicht gezeigten Antriebs mit einer Umfangsgeschwindigkeit antreibbar ist, welche der Fördergeschwindigkeit der Fördervorrichtungen 202 und 203 angepaßt ist. Die als Bandförderer mit Mitnehmerfingern ausgebildete Fördervorrichtung 202 liegt mit ihrer Oberseite im wesentlichen in einer oberen horizontalen Tangentialebene an den Trägerzylinder 200 und die untere Fördervorrichtung 203 liegt mit ihrer Oberseite in einer bei dem gezeigten Ausführungsbeispiel unterhalb der Achse des Trägerzylinders 200 gelegenen Horizontalebene. Auch die Fördervorrichtung 203 hat die Gestalt eines Bandförderers mit Mitnehmerfingern.

Am Umfang des Trägerzylinders 200 befinden sich in gleichen umfangsmäßigen Abständen parallel zur Zylinderachse verlaufende Saugnapfleisten 301, deren Saugnäpfe über innerhalb des Trägerzylinders 200 und längs dessen Welle geführte Leitungen 302 Leiste für Leiste wahlweise und für steuerbare Dauer bzw. für steuerbare Wege der betreffenden Saugnapfleiste beim Umlauf des Trägerzylinders 200 an eine Unterdruckquelle 303 anschließbar sind. Die Saugnapfleisten 301 dienen zum Festhalten von quer zu ihrer Längsrichtung durch die Fördervorrichtung 202 angelieferten Masssivholzwerkstücken 209 während der Bearbeitung sowie auch zum Transport der Werkstücke auf dem Wege zwischen den Fördervorrichtungen 202 und 203. Die in dieser Beschreibung und den Ansprüchen erwähnten Saugnapfleisten können auch in Abschnitte unterteilt sein, die einzeln verdrehbar und je nach Werkstückbreite zu der optimalen Abstützung des Werkstücks schrägstellbar sind.

Die zu bearbeitenden Werkstücke werden von der Fördervorrichtung 202 zu dem die Haltevorrichtung 204 bildenden Trägerzylinder 200 mit den Saugnapfleisten 301 von einer Ausrichtvorrichtung 304 übergeben, welche die Ausrichtung der Längsachse der Werkstücke vornimmt, während sich die Werkstücke längs des Förderkanals bewegen, derart, daß die Werkstückförderung für den Ausrichtvorgang nicht unterbrochen zu werden braucht. Die Ausrichtvorrichtung 304 nimmt die Ausrichtung der Werkstücke vor, während sich die Werkstücke von der Fördervorrichtung 202 kommend über Rollenbahnen 205 bewegen. Werden dann die Werkstücke von der Ausrichtvorrichtung 304 weitergegeben, so werden sie einzeln von den Saugnapfleisten 301 angesogen und nun ausgerichtet am Umfang des Trägerzylinders 200 weitertransportiert, bis sie zu einer ersten Bearbeitungsstation 306 gelangen, welche sich parallel zur Achse des Trägerzylinders 200 in solchem Radialabstand von der Zylinderdrehachse und in solcher Winkelstellung mit Bezug auf diese Drehachse befindet, daß die Bearbeitungswerkzeuge die an den Saugnapfleisten 301 befestigten Werkstücke einseitig oder beidseitig über die gesamte Werkstücklänge hin bearbeiten können. Es sei hier angemerkt, daß die Saugnäpfe der Saugnapfleisten 301 mit geeigneten Ventilen versehen sind, derart, daß auch kürzere Werkstücke unter Sperrung der nicht abgedeckten Saugnäpfe gehalten und transportiert werden können.

Eine weitere Bearbeitungsstation 307, welche in Aufbau und Wirkungsweise der Bearbeitungsstation 306 entspricht, befindet sich in einer anderen Winkelstellung relativ zur Drehachse des Trägerzylinders 200 und den Saugnapfleisten 301 jeweils gegenüberstehend, derart, daß von der Bearbeitungsstation 306 kommende und dort bearbeitete Werkstücke in der Bearbeitungstation 307 einer weiteren Bearbeitung unterzogen werden oder von der Bearbeitungsstation 306 kommende Werkstücke, welche dort überhaupt nicht bearbeitet wurden, nun in der Bearbeitungsstation 307 bearbeitet werden. Es können noch weitere Bearbeitungsstationen entsprechend den Bearbeitungsstationen 306 und 307 am Umfange des Trägerzylinders 200 verteilt vorgesehen sein.

Haben die Werkstücke auf ihrem Weg am Umfange des Trägerzylinders 200 eine Stellung gegenüber dem Beginn der Fördervorrichtung 203 erreicht, so werden die Werkstücke durch Abschalten des Unterdruckes von den Saugnäpfen der Saugnapfleisten 301, gegebenenfalls unter Mithilfe einer Übergabevorrichtung, auf die Fördervorrichtung 203 abgeworfen.

Die Bearbeitungsstationen 306 und 307 sind an Exzenterpaaren 308 bzw. 309 in der aus Fig. 8 ersichtlichen Weise abgestützt. Die Exzenterpaare sind durch Antriebe gemeinsam antreibbar, wobei der den Exzentern 309 zugeordnete Antrieb in Fig. 8 schematisch angegeben und mit 310 bezeichnet ist. Ein entsprechender Antrieb ist für die Exzenter 308 vorgesehen. Die Antriebsgeschwindigkeit der Exzenter 308 und 309 ist so gewählt, daß die Bearbeitungsstationen 306 und 307 auf ihrer translatorischen, kreisenden Bewegung dann, wenn ihr Bewegungsweg sich dem Umfang des Trägerzylinders 200 am weitesten annähert, eine der Umfangsgeschwindigkeit des Trägerzylinders 200 in Größe und Richtung im wesentlichen gleiche Geschwindigkeit haben.

Während vergleichsweise kurzer Zeit, in der diese gleichen und gleichgerichteten Geschwindigkeiten der Werkstücke und der Bearbeitungsstationen bestehen, kann eine Bearbeitung mit hochwirksamen Bearbeitungswerkzeuganordnungen der hier angegebenen Art durchgeführt werden.

Die Art und Weise der Ausrichtung der quer zu ihrer Längsachse angelieferten Werkstücke durch die Ausrichtvorrichtung 304 wird durch eine beispielsweise oberhalb der Fördervorrichtung 202 installierte Fernsehkamera bestimmt, welche die angelieferten Werkstücke vermißt und Signale erzeugt, die die Ausrichtvorrichtung 304 derart steuern, daß die Werkstücke in einer dem Vermessungsergebnis entsprechenden Orientierung relativ zur Mittellängsachse der Saugnapfleisten 301 auf diese aufgesetzt werden und dann in den Bearbeitungsstationen 306 und 307 beispielsweise besäumt werden, wobei die in den Bearbeitungsstationen erzeugten Besäumungs-Trennschnitte eine stets gleichbleibende Orientierung zu den Rändern der Saugnapfleisten 301 haben.

Auf eine Ausrichtstation 304 kann alternativ verzichtet werden, wenn in den Bearbeitungsstationen 306 und 307 durch Verschwenken dieser Bearbeitungsstationen mittels Antrieben um jeweils radial zu der Drehachse des Trägerzylinders 200 orientierte Achsen eine Einstellfunktion verwirklicht ist. Durch Betätigen solcher Antriebe sind die Orientierungen der durch die Bearbeitungsstationen 306 und 307 erzeugbaren Trennschnitte in an den Saugnapfleisten 301 festgehaltenen Werkstücken relativ zu den Rändern der Saugnapfleisten veränderbar.

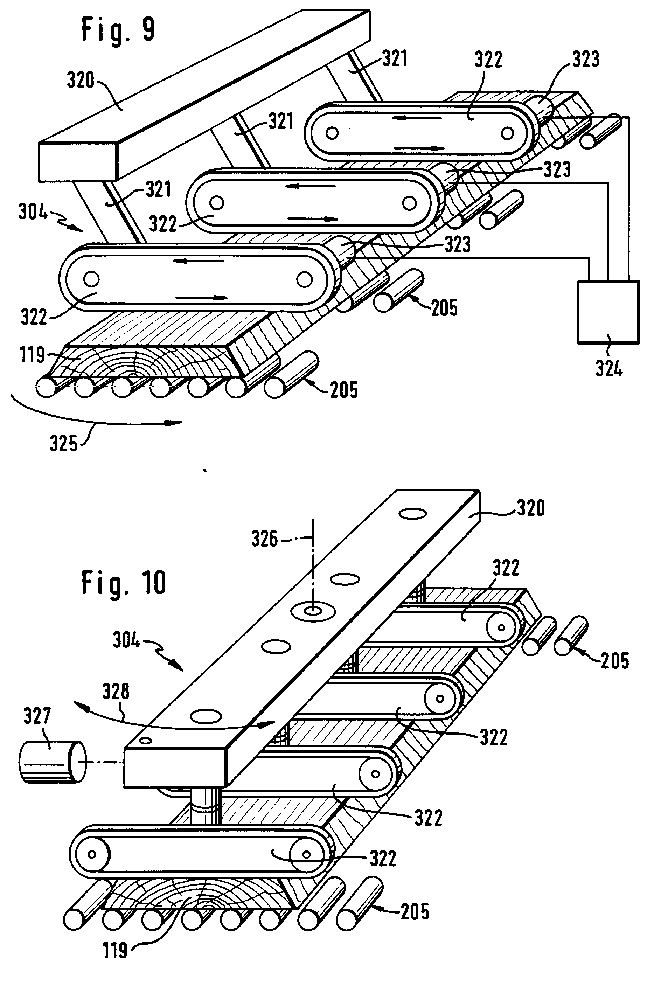

Befindet sich die Ausrichtvorrichtung 304, wie in Fig. 8 gezeigt, auf dem Wege des Förderkanals zwischen der Fördervorrichtung 202 und der Haltevorrichtung, etwa in Gestalt des Trägerzylinders 200, so kann sie die Gestalt von Zwischenfördervorrichtungen haben, wie sie in den Figuren 9 und 10 gezeigt sind. Bei der Bauform nach Fig. 9 sind an einem mit dem Maschinengestell verbundenen, quer über den Förderkanal hinweg verlaufenden Träger 320 über Trägerarme 321 mehrere jeweils an der Oberfläche eines Werkstücks 109 reibschlüsslg angreifende Riemenförderer montiert, deren Treibriemen jeweils gesondert durch zugeordnete Antriebe 123 in der dargestellten Weise in Umlauf versetzt werden, so daß das Werkstück auf Rollenbahnen 205 entsprechend der Laufgeschwindigkeit der Treibriemen vorgeschoben wird. Die Antriebe 323 sind durch ein Steuergerät 324 derart unterschiedlich steuerbar, daß eine gewünschte Ausrichtung der Werkstücklängsachse in Richtung des in Fig. 9 eingezeichneten Pfeiles 325 abhängig von einem an den einzelnen Werkstücken gewonnnen Vermessungsergebnis vorgenommen wird.

Bei der Ausführungsform der Ausrichtvorrichtung 304 nach Fig. 10 werden sämtliche Riemenförderer 322, die längs des Trägers 320 um Vertikalachsen drehbar montiert sind, mit gleicher Umlaufgeschwindigkeit ihrer Treibriemen angetrieben. Hier ist jedoch der Träger 320 nicht fest an dem Maschinengestell montiert, sondern um eine vertikale, am Maschinengestell verankerte Schwenkachse 326 mittels eines Antriebs 327 in Richtung des Pfeiles 328, zur Ausrichtung der Werkstücke 109 auf den Rollenbahnen 205, verschwenkbar. Die Verschwenkung erfolgt wiederum in Abhängigkeit von einem jeweils einem Werkstück zugeordneten und zuvor an diesem Werkstück durch Vermessung gewonnenen Vermessungsergebnis. Anstelle der in den Figuren 9 und 10 gezeigten, über Rollenpaare gelegten Förderriemen können auch einzelne Fördereinheiten der Zwischenfördervorrichtung aus Greiferanordnungen oder Mitnehmerfingeranordnungen aufgebaut werden. Solche Greifer oder Mitnehmerfinger werden zwischen Paaren von Ketten oder Riemen abgestützt oder transportiert, die über Rollenpaare oder Kettenradpaare gelegt sind und auf verschiedenen Höhen parallel verlaufend gelagert sind, so daß die Greifer oder Mitnehmerfinger beim synchronen Antrieb der parallel verlaufend in verschiedener Höhe installierten Ketten oder Riemen translatorische Bewegungen ausführen und auf dem Vorschubweg an den Werkstücken angreifen, auf dem Rückweg jedoch vom Werkstück abgehoben werden.

Fig. 11 zeigt bei teilweise nur symbolischer Angabe bestimmter Einzelheiten eine zweckmäßige Ausführungsform einer der Bearbeitungsstationen 306 und 307 für das Zusammenwirken mit einer Kaltevorrichtung 204 in Gestalt eines mit Saugnapfleisten 301 besetzten Trägerzylinders 200. Die in Fig. 11 schematisch gezeigte Bearbeitungsstation befindet sich in bestimmtem radialen Abstand von der Drehachse des Trägerzylinders 200 und in bestimmter Winkelstellung mit Bezug auf die Drehachse. Die Länge der Bearbeitungsstation in Richtung parallel zur Trägerzylinderachse ist mindestens gleich der Länge der Saugnapfleisten 301.

Eine in Fig. 11 nur schematisch als dünne Platte dargestellte Basis 330 ist gegenüber dem Maschinengestell durch als Kurbeltriebe wirkende Exzenter 309 abgestützt, die durch eine Antriebsvorrichtung 310 (in Fig. 11 ist für jeden Exzenter ein Antrieb 110 eingezeichnet) derart angetrieben werden, daß die Basis 330 eine translatorische, kreisende Bewegung entsprechend dem Pfeil 331 ausführt.

Auf der Basis 330 befindet sich eine in Längsrichtung bzw. quer zum Förderkanal verlaufende Gegenhalteleiste 332, welche gegenüber der Basis 330 derart federnd abgestützt ist, daß sie in Richtung des Pfeiles 333 um einen verhältnismäßig geringen Hub unter Druck federnd gegen die Basis 330 hin nachgibt. Dieser Hub kann zur Berücksichtigung unterschiedlicher Dicken zu bearbeitender Werkstücke einstellbar sein.

Zu beiden Seiten der Gegenhalteleiste 332 befinden sich über deren Länge hin verlaufende, in Richtung der Doppelpfeile 334 verschiebliche und feststellbare Schlitten 335. Auf diesen Schlitten sind jeweils Lenkerpaare 336 bzw. 337 derart verschwenkbar gelagert, daß sie mittels nicht gezeigter Antriebe in einem begrenzten Winkelbereich in Ebenen verschwenkbar sind, die parallel zur Mittellängsebene der Bearbeitungsstation und parallel zur Drehachse des Trägerzylinders 200 orientiert sind, soweit es sich um eine Bearbeitungsstation für eine Einrichtung nach Fig. 8 handelt. Wie zuvor ausgeführt, kann diese Ebene jedoch durch Verschwenkung der gesamten Bearbeitungsstation relativ zur Orientierung der Trägerzylinderdrehachse eingestellt werden.

Die Lenkerpaare 336 und 337 tragen Längsträger 338 bzw. 339, an denen jeweils gleichzeitig antreibbare Kreissägen mit in einer Ebene gelegenen Kreissägeblättern 340 bzw. 341 montiert sind. Die Antriebe für die Kreissägeblätter sind aus Gründen der Übersichtlichkeit der Darstellung weggelassen. Die Lagen der Ebenen, in denen die Sägeblätter 340 bzw. 341 gelegen sind, mit Bezug auf die Gegenhalteleiste 332 lassen sich durch entsprechendes Einstellen der Schlitten 335 wahlweise verändern.

In den jeweiligen durch die zugeordneten Schwenkantriebe erzeugbaren Grenzstellungen der Lenker 336 und 337 liegen die Scheitel der Sägeblätter 340 und 341 unterhalb der durch die Oberfläche der Gegenhalteleiste 332 bestimmten Ebene. Werden die Lenker 336 und 337 von einer Grenzstellung über die senkrechte Stellung mit Bezug auf die Basis 330 hinweg in die andere Grenzstellung geschwenkt, so tauchen die Scheitel der Sägeblätter 340 und 341 in einer bogenförmigen Bewegung über das Niveau der durch die Oberfläche der Gegenhalteleiste 332 bestimmten Ebene auf, wobei sich in dieser Bogenbewegung die durch die einzelnen Sägeblätter erzeugbaren Schnitte oberhalb der soeben erwähnten Ebene überlappen.

Wandert nun ein an einer Saugnapfleiste des Trägerzylinders 200 fixiertes Werkstück 209 in Gestalt eines zu besäumenden Brettes in eine der Bearbeitungsstation 306 bzw. 307 unmittelbar gegenüberliegende Stellung, so werden die Exzenter oder Kurbeltriebe 309 durch die Antriebe 310 mit solcher Geschwindigkeit in Umdrehung versetzt, daß die Oberfläche der Gegenhalteleiste 332 rasch aus einer Lage in größerer Entfernung von der Drehachse des Trägerzylinders in Richtung auf diese Drehachse bewegt wird, das Werkstück zwischen sich und der Saugnapfleiste 301, welche das betreffende Werkstück trägt, einklemmt und dann aufgrund einer entsprechenden Antriebsgeschwindigkeit der Antriebe 310 dem Werkstück mit einer der Umfangsgeschwindigkeit des Trägerzylinders 200 etwa gleichen Geschwindigkeit folgt, um danach beim weiteren Umlauf der Exzenter 309 wieder von dem Werkstück abgehoben zu werden.

In demjenigen Zeitabschnitt aber, in welchem die Gegenhalteleiste 332 und auch die Kreissägen mit den Kreissägeblättern 340 und 341 auf der Basis 330 im wesentlichen geschwindigkeitsgleich mit dem Werkstück etwa in Tangentialrichtung relativ zum Trägerzylinder bewegt werden, erfolgt eine Betätigung der Lenker 336 und 337 derart, daß die Kreissägeblätter sämtlich ihre Bogenbewegungen in der gemeinsamen Ebene entsprechend der Ebene eines Trennschnittes ausführen und die Bearbeitung des betreffenden Werkstückes beidseitig in Sekundenbruchteilen vorgenommen wird.

Wie zuvor schon angedeutet, kann der Förderkanal bei vielen der beschriebenen Ausführungsformen in Förderrichtung auch vertikal orientiert sein und der Arbeitshub der Bearbeitungswerkzeuganordnungen verläuft dann zum Erzeugen der Trennschnitte oder Bearbeitungsflächen jeweils horizontal.

## Patentansprüche

1. Einrichtung zur Bearbeitung von Massivholzwerkstücken (5; 105) in ihrer Längsrichtung, mit
a) einer Bearbeitungsstation (15, 34), die eine wirksame Bearbeitungsbreite mindestens gleich der Länge zu bearbeitender Werkstücke hat,
b) einem auf die Bearbeitungsstation hin, durch sie hindurch und von ihr weg verlaufenden Werkstück-Förderkanal, dessen Querschnitt durchgehend mindestens eine Breite gleich der Länge zu bearbeitender Werkstücke und eine Höhe mindestens gleich der Höhe dieser Werkstücke hat, und in dem die Werkstücke quer zu ihrer Längsrichtung zur Bearbeitungsstation hin und von ihr weg förderbar sind,
c) einer Halte- und Spannvorrichtung (16, 18), welche der Bearbeitungsstation zugeordnet ist und außerhalb des Arbeitsbereiches einer Bearbeitungswerkzeuganordnung (26, 27) der Bearbeitungsstation an den Werkstücken angreift, und welche die Werkstücke (5; 105) im wesentlichen über ihre gesamte Länge hin an zwei längslaufenden Werkstückflächen, die zur Ebene der herzustellenden Bearbeitungsfläche oder Trennebene im wesentlichen senkrecht sind, einspannt oder hält,
d) einer Einstellvorrichtung zur Einstellung der relativen Lage der Bearbeitungswerkzeuganordnung und der Werkstücke zwecks Einstellung der Orientierung von an den Werkstücken herzustellenden Längs-Trennschnitten oder Längs-Bearbeitungsflächen relativ zur Werkstücklängsachse, und mit
e) einer Ausgestaltung der Bearbeitungswerkzeuganordnung (26, 27) zur im wesentlichen taktweisen Bearbeitung der Werkstücke (5; 105)
*dadurch gekennzeichnet, daß* die Bearbeitungsstation mindestens eine jeweils mittels eines Antriebs (26) absenkbare und anhebbare Messerleiste (27, 37) enthält, deren Länge mindestens gleich der Länge zu bearbeitender brettartiger Werkstücke (5) ist, und die im wesentlichen an sämtlichen Längenabschnitten des Werkstückes gleichzeitig die Bearbeitung vornimmt.

2. Einrichtung zur Bearbeitung von Massivholzwerkstücken(5; 105) in ihrer Längsrichtung, mit
a) einer Bearbeitungsstation (15, 34), die eine wirksame Bearbeitungsbreite mindestens gleich der Länge zu bearbeitender Werkstücke hat,
b) einem auf die Bearbeitungsstation hin, durch sie hindurch und von ihr weg verlaufenden Werkstück-Förderkanal, dessen Querschnitt durchgehend mindestens eine Breite gleich der Länge zu bearbeitender Werkstücke und eine Höhe mindestens gleich der Höhe dieser Werkstücke hat, und in dem die Werkstücke quer zu ihrer Längsrichtung zur Bearbeitungsstation hin und von ihr weg förderbar sind,
c) einer Halte- und Spannvorrichtung (16, 18), welche der Bearbeitungsstation zugeordnet ist und außerhalb des Arbeitsbereiches einer Bearbeitungswerkzeuganordnung (26, 27) der Bearbeitungsstation an den Werkstücken angreift, und welche die Werkstücke (5; 105) im wesentlichen über ihre gesamte Länge hin an zwei längslaufenden Werkstückflächen, die zur Ebene der herzustellenden Bearbeitungsfläche oder Trennebene im wesentlichen senkrecht sind, einspannt oder hält,
d) einer Einstellvorrichtung zur Einstellung der relativen Lage der Bearbeitungswerkzeuganordnung und der Werkstücke zwecks Einstellung der Orientierung von an den Werkstücken herzustellenden Längs-Trennschnitten oder Längs-Bearbeitungsflächen relativ zur Werkstücklängsachse, und mit
e) einer Ausgestaltung der Bearbeitungswerkzeuganordnung (26, 27) zur im wesentlichen taktweisen Bearbeitung der Werkstücke (5; 105),
*dadurch gekennzeichnet, daß* die Bearbeitungsstation mindestens eine sich mindestens über eine Länge entsprechend der Länge zu bearbeitender Werkstücke (5; 105) erstreckende, mittels eines Antriebs absenkbare oder anhebbare Sägevorrichtung (45; 129, 130; 132, 133; 133, 137; 133, 134, 306, 307) enthält, die im wesentlichen an sämtlichen Längenabschnitten des Werkstückes gleichzeitig die Bearbeitung vornimmt.

3. Einrichtung nach Anspruch 2, *dadurch gekennzeichnet, daß* die Sägevorrichtung eine sich über eine Länge gleich der Länge der zu bearbeitender Werkstücke (5; 105) erstreckende Kettensäge (45) ist, welche insbesondere Sägezähne mit einer Höhe entsprechend der Tiefe herzustellender Trennschnitte und Zahnzwischenräume aufweist, die der Menge anfallender Späne auf dem Weg eines Sägezahns über die Länge des betreffenden Werkstücks hin angepaßt ist und welche weiter insbesondere Sägezahn-Führungsmittel über die gesamte Länge der wirksamen Bearbeitungsbreite der Sägevorrichtung aufweist, welche stets außerhalb des Trennschnittes verbleiben.

4. Einrichtung nach Anspruch 2, *dadurch gekennzeichnet, daß* die Sägevorrichtung die Gestalt mindestens einer Spannsäge (129, 130) mit einer der Tiefe des herzustellenden Trennschnittes angepaßten Abmessung der Zahnhöhen und Zahnabstände aufweist.

5. Einrichtung nach Anspruch 2, *dadurch gekennzeichnet, daß* die Sägevorrichtung Gruppen von mit ihren Sägeblättern bzw. Sägeschwertern in Ebenen entsprechend dem herzustellenden Trennschnitt gelegenen, gleichzeitig antreibbaren Kreissägen (134) oder insbesondere schräggestellten Kettensägen (137) aufweist, welche in einer Absenkbewegung und/oder Schwenkbewegung und/oder Bewegung mit einer Komponente in Richtung der Werkstücklängserstreckung in das zu bearbeitende Werkstück zur Herstellung eines Trennschnittes einstechen.

## Claims

1. Device for longitudinally working solid timber workpieces (5; 105), with
a) a work station (15, 34) which has an effective processing width at least equal to the length of workpieces to be processed,
b) a workpiece conveyor channel, extending to the work station, through it and away from it, whose cross-section has continuously a width at least equal to the length of workpieces to be processed and a height at least equal to the height of these workpieces, and in which the workpieces may be conveyed transversely to their longitudinal direction towards the work station and away from it,
c) a retaining and clamping device (16, 18) associated with the work station and engaging outwith the working range of a processing tool arrangement (26, 27) of the work station on the workpieces, and which clamps or holds the workpieces (5; 105) substantially over their entire length on two longitudinally-extending workpiece surfaces, which are substantially perpendicular to the plane of the process surface to be produced or separating plane,
d) an adjusting device for setting the relative position of the processing tool arrangement and the workpieces in order to set the orientation of longitudinal separation cuts to be produced on the workpieces or longitudinal processing surfaces relative to the longitudinal axis of the workpiece, and with
e) a design of the processing tool arrangement (26, 27) for substantially intermittent processing of the workpieces (5; 105)
characterised in that the work station includes at least one cutter strip (27, 37) which may respectively be lowered and raised by means of a drive system (26), the length of said cutter strip being at least equal to the length of the board-like workpieces (5) to be processed, and which undertakes the processing substantially on all the longitudinal sections of the workpiece simultaneously.

2. Device for longitudinally working solid timber workpieces (5; 105), with
a) a work station (15, 34) which has an effective processing width at least equal to the length of workpieces to be processed,
b) a workpiece conveyor channel extending to the work station, through it and away from it, whose cross-section continuously has at least a width equal to the length of workpieces to be processed and a height at least equal to the height of these workpieces, and in which the workpieces may be conveyed transversely to their longitudinal direction towards the work station and away from it,
c) a retaining and clamping device (16, 18) associated with the work station and engaging outwith the working range of a processing tool arrangement (26, 27) of the work station on the workpieces, and which clamps or holds the workpieces (5; 105) substantially over their entire length on two longitudinally-extending workpiece surfaces, which are substantially perpendicular to the plane of the process surface to be produced or separating plane,
d) an adjusting device for setting the relative position of the processing tool arrangement and the workpieces in order to set the orientation of longitudinal separation cuts to be produced on the workpieces or longitudinal processing surfaces relative to the longitudinal axis of the workpiece, and with
e) a design of the processing tool arrangement (26, 27) for substantially intermittent processing of the workpieces (5; 105)
characterised in that the work station includes at least one saw device (45; 129, 130; 132, 133; 133, 137; 133, 134, 306, 307) extending at least over a length corresponding to the length of workpieces (5; 105) to be processed and which can be lowered and raised by means of a drive system, said saw device simultaneously undertaking processing substantially on all the longitudinal sections of the workpiece.

3. Device according to claim 2, characterised in that the saw device is a chainsaw (45) extending over a length equal to the length of the workpieces (5; 105) to be processed, and which in particular has saw teeth with a length corresponding to the depth of separating cuts to be produced and tooth intervals adapted to the quantity of sawdust occurring on the path of a saw tooth over the length of the relevant workpiece, and which further in particular has saw tooth guide means over the entire length of the effective processing width of the saw device, which always remain outwith the separated section.

4. Device according to claim 2, characterised in that the saw device is in the form of at least one frame saw (129, 130) with a dimension of tooth length and tooth intervals adapted to the depth of the separating cuts to be produced.

5. Device according to claim 2, characterised in that the saw device has groups of simultaneously drivable circular saws (134) lying with their saw blades in planes corresponding to the separating cut to be produced, or in particular obliquely-positioned chainsaws (137) which penetrate in a lowering movement and/or pivoting movement and/or movement with the component in the direction of the longitudinal extension of the workpiece into the workpiece to be processed, in order to produce a separating cut.

## Revendications

1. Dispositif pour l'usinage de pièces de bois massives (5; 105) dans le sens de leur longueur, comportant
a) une station d'usinage (15, 34) qui présente une largeur d'usinage effective au moins identique à la longueur des pièces à usiner,
b) un canal de transport des pièces s'étendant vers la station d'usinage, à travers celle-ci et s'éloignant de celle-ci, dont la section transversale présente partout au moins une largeur identique à la longueur des pièces à usiner et une hauteur au moins identique à la hauteur de ces pièces, et dans lequel les pièces peuvent être transportées transversalement par rapport au sens de leur longueur vers la station d'usinage et de celle-ci en s'éloignant d'elle,
c) un dispositif de maintien et de serrage (16, 18) qui est associé à la station d'usinage et qui s'attaque en dehors de la zone de travail d'un ensemble d'outils d'usinage (26, 27) de la station d'usinage aux pièces de bois, et qui sert au maintien ou au serrage des pièces (5, 105) substantiellement sur toute leur longueur à deux surfaces de la pièce s'étendant dans le sens de la longueur, qui sont substantiellement perpendiculaires par rapport au plan de la surface d'usinage ou au plan de séparation à réaliser.
d) un dispositif de réglage pour régler la position relative de l'ensemble d'outils d'usinage et des pièces dans le but de régler l'orientation des coupes de séparation longitudinales ou des surfaces d'usinage longitudinales à réaliser sur les pièces par rapport à l'axe longitudinal des pièces et comportant
e) un agencement de l'ensemble d'outils d'usinage (26, 27) pour l'usinage substantiellement cadencé des pièces (5; 105),
caractérisé en ce que la station d'usinage comporte au moins une rangée de couteaux (27, 37) pouvant être abaissée et relevée au moyen d'un entraînement (26), dont la longueur est au moins identique à la longueur des pièces (5) semblables à des planches à usiner, et qui procède à l'usinage substantiellement simultané sur la totalité des tronçons longitudinaux de la pièce.

2. Dispositif pour l'usinage de pièces de bois massives (5; 105) dans le sens de leur longueur, comportant
a) une station d'usinage (15, 34) qui présente une largeur d'usinage effective au moins identique à la longueur des pièces à usiner,
b) un canal de transport des pièces s'étendant vers la station d'usinage, à travers celle-ci et s'éloignant de celle-ci, dont la section transversale présente partout au moins une largeur identique à la longueur des pièces à usiner et une hauteur au moins identique à la hauteur de ces pièces, et dans lequel les pièces peuvent être transportées transversalement par rapport au sens de leur longueur vers la station d'usinage et de celle-ci en s'éloignant d'elle,
c) un dispositif de maintien et de serrage (16, 18) qui est associé à la station d'usinage et qui s'attaque aux pièces en dehors de la zone de travail d'un ensemble d'outils d'usinage (26, 27) de la station d'usinage, et qui sert au maintien ou au serrage des pièces (5, 105) substantiellement sur toute leur longueur à deux surfaces de la pièce s'étendant dans le sens de la longueur, qui sont substantiellement perpendiculaires par rapport au plan des surfaces d'usinage ou au plan de séparation à réaliser,
d) un dispositif de réglage pour régler la position relative de l'ensemble d'outils d'usinage et des pièces dans le but de régler l'orientation des coupes de séparation longitudinales ou des surfaces d'usinage longitudinales à réaliser sur les pièces par rapport à l'axe longitudinal des pièces et comportant
e) un agencement de l'ensemble d'outils d'usinage (26, 27) pour l'usinage substantiellement cadencé des pièces (5; 105)
caractérisé en ce que la station d'usinage comporte au moins un dispositif à scie (45; 129, 130; 132, 133; 133, 137; 133, 134, 306, 307) s'étendant au moins sur une longueur correspondant à la longueur des pièces à usiner (5; 105) et pouvant être abaissé et relevé au moyen d'un entraînement, lequel dispositif à scie procède à l'usinage substantiellement simultané sur la totalité des tronçons longitudinaux de la pièce.

3. Dispositif selon la revendication 2, caractérisé en ce que le dispositif à scie est une scie à chaîne (45) s'étendant sur une longueur identique à la longueur des pièces à usiner (5; 105), qui présente notamment des dents de scie ayant une hauteur correspondant à la profondeur des coupes de séparation et des interstices entre les dents à réaliser, qui est adaptée à la quantité de copeaux produits sur la course d'une dent de scie sur la longueur de la pièce correspondante et qui présente par ailleurs notamment des moyens de guidage des dents de scie par dessus la longueur totale de la largeur d'usinage effective du dispositif à scie, qui restent en permanence en dehors de la coupe de séparation.

4. Dispositif selon la revendication 2, caractérisé en ce que le dispositif à soie présente la forme d'au moins une scie à refendre (129, 130) dont les dents présentent des hauteurs et des écartements de dimensions adaptées à la profondeur des coupes de séparation à réaliser.

5. Dispositif selon la revendication 2, caractérisé en ce que le dispositif à scie présente des groupes de scies circulaires (134) ou notamment des scies à chaîne (137) obliques pouvant être simultanément entraînées, situées avec leurs lames de scie ou couperets dans des plans correspondant à la coupe de séparation à réaliser, lesquels scies piquent dans la pièce à usiner pour la réalisation d'une coupe de séparation par un mouvement d'abaissement et/ou un mouvement basculant et/ou un mouvement accompagnant un composant en direction du sens en longueur de la pièce.
